# EUROPEAN PATENT APPLICATION

(11) **EP 4 800 970 A1**
(43) Date of publication of application: **02.09.2026**
(21) Application number: 25382186.2
(22) Date of filing: 28.02.2025
(51) Int. Cl.: H04L 9/08, H04B 10/70

(54) **RECEIVER MODULE FOR USE IN CONTINUOUS-VARIABLE QUANTUM KEY DISTRIBUTION**

(71) Applicant: LuxQuanta Technologies S.L., 08860 Castelldefels (ES)
(72) Inventor: Tabares, Jeison, 08860 Castelldefels, Barcelona (ES); Gomez Kabelka, Pau, 08860 Castelldefels, Barcelona (ES); Sarmiento, Samael, 08860 Castelldefels, Barcelona (ES); Etcheverry, Sebastian, 08860 Castelldefels, Barcelona (ES)
(74) Representative: Grünecker Patent- und Rechtsanwälte PartG mbB

(57) **Abstract**

The present invention relates to a receiver module for use in continuous-variable quantum key distribution, the receiver module comprising: a symmetric 3x3 optical coupler having three input ports and three output ports; a quantum channel for providing a quantum signal to the symmetric 3x3 optical coupler; an optical switch means arranged between the quantum channel and a first input port of the symmetric 3x3 optical coupler and configured to block or attenuate the quantum signal; a first single-ended photodetector and a second single-ended photodetector; and a signal processing unit configured to process the outputs of the single-ended photodetectors, wherein the first single-ended photodetector is coupled to a first output port of the symmetric 3x3 optical coupler and the second single-ended photodetector is coupled to a second output port of the symmetric 3x3 optical coupler.

## Description

The present invention relates to a receiver module for use in continuous-variable quantum key distribution (CV-QKD).

### Technical background

Quantum Key Distribution (QKD) is a technology that enables two parties to share cryptographic keys securely by transmitting quantum signals over a communication channel. Quantum signals are signals that are represented by quantum states (e.g. coherent states, Fock states or multi-photon entangled states like Bell states). The security of QKD is grounded in the principles of quantum physics, which allows the communicating parties to detect any eavesdropping attempts. In a prepare-and-measure QKD system, the emitter (Alice) prepares quantum signals encoded with information according to a specific protocol and sends the signals through an optical channel to the receiver (Bob). Bob performs measurements on the received signals to obtain data that correlates with Alice's preparation choices. The resulting correlated data is processed using a classical communication channel to extract a shared secret key. The two predominant available QKD technologies are discrete-variable QKD (DV-QKD) and CV-QKD.

In CV-QKD, quantum signals are measured using a receiver module that implements shot noise-limited coherent detection, which is a key distinction from DV-QKD that requires single-photon detection. CV-QKD typically uses coherent states of light as quantum signals, with information encoded in the quadratures of the electromagnetic field. These quadratures are expressed as X = AcosΦ and P = AsinΦ, where A and Φ represent the amplitude and phase of the quantum signals, respectively.

A CV-QKD receiver module with heterodyne detection according to the prior art (e.g. Weedbrock et al. "Quantum cryptography without switching", Physical review letters 93.17 (2004): 170504; Qi et al., "Generating the Local Oscillator "Locally" in Continuous-Variable Quantum Key Distribution Based on Coherent Detection", Physical Review X 5, 041009 (2015)) requires a high-intensity light source called local oscillator LO, which interferes with the quantum signals and provides a signal that is proportional to the quadratures X and P. The field from the local oscillator is mixed with the quantum signal using an optical 90° hybrid and detected by balanced photodetectors. The bandwidth required for the photodetectors is typically equivalent to the modulation bandwidth of the quantum signal, in order to recover the quadratures of the quantum signal accurately. However, commercially available optical 90° hybrids are typically expensive and induce high coupling losses when interfacing with optical fibers, affecting the overall CV-QKD receiver performance. In addition, commercial optical 90° hybrids usually exhibit quadrature imbalance of approximately ±5°, which introduces noise to the measured quantum signal and negatively affects the overall system performance.

An alternative scheme was proposed in Hajomer et al. "Long-distance continuous-variable quantum key distribution over 100 km-fiber with local oscillator", Science Advances 10.1 (2024): eadi9474. To eliminate the need for an optical 90° hybrid, heterodyne detection is shifted to the radio-frequency domain. This implementation is achieved by shifting the frequency difference Δf between the field from the local oscillator and the quantum signal to a frequency higher than the modulation bandwidth B of the quantum signal. However, the use of radio-frequency heterodyne detection requires photodetectors and analog-to-digital-converters (ADCs) with high bandwidth, corresponding to the sum of B and Δf. This requirement of higher bandwidth increases the complexity and cost of the electronic components in CV-QKD, and further requires an additional frequency down-conversion stage to recover the X and P quadratures of the quantum signals.

In view of these shortcomings of the prior art, it would be desirable to have a receiver module for CV-QKD that addresses the limitations associated with conventional CV-QKD receivers by providing a design that eliminates the need for optical 90° hybrids while simultaneously removing the requirement for high-bandwidth photodetectors and ADCs used in radio-frequency heterodyne detection.

This object is achieved by the device that implements a receiver module for CV-QKD according to claim 1. Further embodiments are represented by the dependent claims.

### Summary of the invention

The receiver module for use in continuous-variable quantum key distribution according to the present invention comprises a symmetric 3x3 optical coupler having three input ports and three output ports, a quantum channel for providing a quantum signal to the symmetric 3x3 optical coupler, an optical switch means arranged between the quantum channel and a first input port of the symmetric 3x3 optical coupler and configured to block or attenuate the quantum signal, a single-ended photodetector, a second single-ended photodetector, and a signal processing unit configured to process the outputs of the single-ended photodetectors. The first single-ended photodetector is coupled to a first output port of the symmetric 3x3 optical coupler and the second single-ended photodetector is coupled to a second output port of the symmetric 3x3 optical coupler.

The receiver module according to the present invention employs a symmetric 3x3 optical coupler to mix the quantum signal with a second reference signal. The output of the optical coupler consists of three optical fields that result from the mixing of the quantum signal with the reference signal with phase shifts in multiples of 2π/3. A scheme, which will be described in full detail below and which involves detection of the mixed signals via single-ended photodetectors and processing of the respective outputs with the signal processing unit, allows for cancellation of noise and recovery of the quadrature components. Hence, the proposed receiver module does not require an optical 90° hybrid for determining the X and P quadrature components of the quantum signal. Again, the quadratures are expressed as X = AcosΦ and P = AsinΦ, where A and Φ represent the amplitude and phase of the quantum signal, respectively. Instead of the optical 90° hybrid, the present receiver module relies on a symmetric 3x3 optical coupler. Moreover, detection with this scheme can be performed in a regime Δ*f « B,* which allows for using low-bandwidth photodetectors, thus saving complexity and cost of the electronic components.

The quantum channel may be an optical fiber. Alternatively, the quantum channel may be free space.

There may be provided a local oscillator configured to emit coherent reference light. The reference light may be provided to the first or second input port of the symmetric 3x3 optical coupler. At the optical coupler, the reference light interferes with the quantum signal in a manner described herein below. The local oscillator may not be part of the receiver module. There may be provided a receiver system comprising the receiver module and said local oscillator.

The optical switch means can be an optical switch. Alternatively, the optical switch means can be an optical attenuator configured to attenuate incident light.

The expression "two single-ended photodetectors" has to be understood as "at least two photodetectors". The receiver module may comprise only two photodetectors.

The optical switch means support two modes of operation. In a first mode, the quantum signal provided by the quantum channel passes through the optical switch and reaches the first input port of the symmetric 3x3 optical coupler. In a second mode, the quantum signal is blocked and does not reach the first input port of the symmetric 3x3 optical coupler. The optical switch means allows for a characterization of the shot noise and electronic noise of the receiver module, in particular, the noises generated at the photodetectors. When blocking the quantum signal, any signal received by the signal processing unit must originate from the shot noise generated by the local oscillator. The shot noise can thus be characterized and processed within a digital processing routine, as it is required to implement the CV-QKD protocol. This routine may be implemented in the signal processing unit.

The photodetectors are single-ended whereas common CV-QKD receiver modules employ balanced photodetectors. In single-ended detection schemes, balancing and noise suppression is implemented through digital signal processing routines performed by the signal processing unit. These routines must balance the photodetection with high accuracy to provide low noise and high detection clearance, while addressing conditions such as saturation of detectors, distortions, differences between the electronic and shot noise of each photodetector, and variations in detection efficiencies. On the other hand, compensation of imperfections can be performed by digital signal processing. More precisely, deviations in the 3x3 splitting ratios and phase relations, as well as variations in detection efficiencies can be compensated as part of the digital signal processing, yielding an improved common mode rejection.

The receiver module may further comprise a local oscillator configured to emit light at a predetermined frequency, wherein the local oscillator is connected to a second input port of the symmetric 3x3 optical coupler. The second input port is different from the first input port.

The local oscillator can be a high-intensity coherent light source with narrow spectral width, such as a continuous-wave laser. In particular, the local oscillator emits light at a well-defined frequency. To this end, the frequency emitted by the local oscillator may be stabilized. The spectral width of the emitted light from the local oscillator may be smaller than or equal to 0.05 % of the modulation bandwidth of the quantum signal. In particular, the spectral width of the emitted light is smaller than or equal to 0.01 % of the modulation bandwidth of the quantum signal for. The optical power of the emitted light may be 1 mW (0 dBm) or higher. In particular, the optical power is higher than 2 dBm for a receiver module implemented with photodetectors that have noise equivalent power of $20 pW / \sqrt{Hz}$, so that the receiver module operates in the shot noise regime. In this regime, the quantum-nature noise created by the photodetectors is the dominant noise source over other sources of electronic noise.

Providing the light from the local oscillator at the second input port of the symmetric 3x3 optical coupler provides higher flexibility as it allows for provision of the quantum signal and the light from the local oscillator via separate channels. Hence, both signals can be treated separately, for instance for noise characterization, by selectively blocking the signal and the local oscillator. As an alternative, both signals may be provided through the quantum channel. However, this scheme may open security vulnerability.

The properties of the local oscillator may also be applicable to the previously-described local oscillator that was not part of the receiver module.

The present configuration of the receiver module provides the option of working with frequency differences much smaller than the modulation bandwidth of the quantum signal (Δ*f « B*), unlike radio-frequency heterodyne detection, for instance. Thus, lower bandwidth requirements are imposed on the photodetectors so that cost and complexity of the underlying electronics is reduced. Moreover, lower-bandwidth components provide higher accuracy in their measured quantities.

A frequency difference between the quantum signal and the light emitted by the local oscillator may be smaller than or equal to 5 % of the modulation bandwidth of the quantum signal. In particular, the frequency difference is smaller than or equal to 1 % of the modulation bandwidth of the quantum signal.

A third input port of the symmetric 3x3 optical coupler may remain open.

The proposed configuration of the receiver module relies on the interference between the quantum signal and the reference signal such as the light from the local oscillator, as mixing these signals enables the extraction of the quadrature components X and P after the protodetection. Nonetheless, the currently unused third input port of the symmetric 3x3 optical coupler increases the flexibility of the receiver module as it opens up the possibility to provide a third signal, which may be useful for specific measurement protocols, or for alternative configurations of the optical receiver.

Following the single-ended detection by the photodetectors, the respective outputs of the photodetectors are digitized by a corresponding analog-to-digital converter (ADC). The receiver module may further comprise a first analog-to-digital converter for digitizing the output of the first single-ended photodetector and a second analog-to-digital converter for digitizing the output of the second single-ended photodetector, wherein the digitized outputs of the first and second single-ended photodetectors are provided to the signal processing unit.

The above-mentioned bandwidth requirements equally apply to the ADCs as these have to be configured to process the signal output by the photodetectors. Insofar, it is advantageous to work in a regime of small frequency difference, i.e. Δ*f* « *B,* as this also reduces cost and complexity of the ADC electronics. Again, the condition Δ*f* « *B* can mean that Δ*f* ≤ 0.05*B* or even that Δ*f* ≤ 0.01*B*. The ADCs have to be suitable for this frequency range.

The receiver module may further comprise a third single-ended photodetector connected to a third output port of the symmetric 3x3 optical coupler, wherein an output of the third single-ended photodetector is provided to the signal processing unit. In particular, the receiver module may further comprise a third analog-digital converter for digitizing the output of the third single-ended photodetector and providing the digitized output to the signal processing unit.

Compared to the previously described scheme wherein two photodetected currents/signals are used for the recovery of quadrature components X and P, using all three signals output by the symmetric 3x3 optical coupler reduces the overall noise of the system. This is because the direct-detection terms and the common-mode noise remain in the recovered X quadrature in the scheme with only two photodetected signals.

The receiver module may comprise a further optical switch means arranged between the local oscillator and the second input port of the symmetric 3x3 optical coupler, wherein the further optical switch means is configured to block or attenuate the light from the local oscillator.

As explained previously, an optical switch provides for accurate characterization of noise within the receiver module, in particular, of the photodetectors. The further optical switch means supports the same two modes of operation as the optical switch means arranged between the quantum channel and the symmetric 3x3 optical coupler. When blocking both the quantum signal and the light from the local oscillator, any signal received by the signal processing unit must originate from the electronic components. In this manner, the electronic noise originating from the photodetectors and further electronics, in addition to shot noise generated by the local oscillator, can be characterized accurately and better calibration of the CV-QKD receiver can be performed.

The signal processing unit may comprise a Field Programmable Gate Array (FPGA) and/or an application-specific integrated circuit (ASIC). FPGAs and ASICs are suitable for the implementation of the present receiver module and the associated recovery of data encoded in the quadrature components of the detected signals.

The receiver module may further comprise a polarization controlling means arranged between the quantum channel and the first input port of the symmetric 3x3 optical coupler or between the optical switch means and the first input port of the symmetric 3x3 optical coupler, wherein the polarization controlling means is configured to align the polarization of the quantum signal with the polarization of the light emitted by the local oscillator. Hence, the polarization controlling means may be configured to rotate the polarization of the quantum signal so that the polarization of the quantum signal is parallel to the polarization of the light from the local oscillator. In particular, the polarization controlling means is an active component. The polarization controlling means may be controllable based on feedback control in order to maintain said polarizations parallel, thus improving the coherent detection process.

As an alternative, the polarization controlling means may be arranged between the local oscillator and the second input port of the symmetric 3x3 optical coupler. This arrangement achieves the same advantage as the polarization controlling means have the purpose of aligning the polarizations of the quantum signal and the light from the local oscillator. To this end, one may either change or rotate the polarization of the quantum signal or the polarization of the light from the local oscillator.

The quantum signal and the light from the local oscillator interfere at the symmetric 3x3 optical coupler. The interference signal is thereby proportional to the cosine of the scalar product of the polarization vectors of both signals. In other words, the interference is strongest when the polarization of both signals is the same, i.e. their polarization is aligned. On the other hand, when the polarization vectors are orthogonal to each other, the interference may even vanish. Therefore, aligning the two polarizations with respect to each other maximizes the optical interference signal and facilitates detection thereof. When the polarization controlling means are an active component involving feedback control, the amplitude of the interference signal is intended to be maintained at or close to maximum, thus providing the stable and optimal signal-to-noise ratio conditions for the receiver module.

The receiver module may further comprise a further symmetric 3x3 optical coupler with three input ports and three output ports, a first beam splitter being a polarization beam splitter, and a second beam splitter, wherein the first beam splitter is configured to separate two orthogonal polarization components of the quantum signal, to provide the first polarization component to the first input port of the symmetric 3x3 optical coupler and to provide the second polarization component of the quantum signal to a first input port of the further symmetric 3x3 optical coupler, wherein the second beam splitter is configured to separate the light from the local oscillator into two parts, to provide the first part to the second input port of the symmetric 3x3 optical coupler and to provide the second part to a second input port of the further symmetric 3x3 optical coupler. In this case, the receiver module may not include the polarization controlling means.

The second beam splitter may also be a polarization beam splitter.

With this configuration, it is possible to combine the measurements related to the two polarization components of the quantum signal separated by the polarization beam splitter. This dual-polarization scheme avoids the use of active components for tracking and aligning the polarization of the quantum signal, but uses a passive polarizing beam splitter instead. Therefore, a purely passive optical front-end design is provided that is more suitable for photonic integration.

The receiver module may further comprise a first further single-ended photodetector and a second further single-ended photodetector, as well as a first further analog-to-digital converter and a second further analog-to-digital converter, wherein the first further analog-to-digital converter is configured to digitize the output of the first further single-ended photodetector, wherein the second further analog-to-digital converter is configured to digitize the output of the second further single-ended photodetector, and wherein the digitized outputs of the first and second further analog-to-digital converters are provided to the signal processing unit.

In a configuration where both symmetric 3x3 optical couplers are employed in connection with single-ended photodetectors and ADCs providing their output to the signal processing unit, the flexibility of the receiver module can be enhanced. This is because different information can be encoded in the two polarization components and analyzed separately. Said advantage comes at the expense of increased complexity in terms of the number of required photodetectors and ADCs.

The receiver module may comprise a third further single-ended photodetector and a third further analog-to-digital converter, wherein the third further analog-to-digital converter is configured to digitize the output of the third further single-ended photodetector, and wherein the digitized outputs of the third further analog-to-digital converter is provided to the signal processing unit.

Compared to the previously described scheme wherein two photodetected currents/signals are used for the recovery of quadrature components X and P, using all three signals output by the symmetric 3x3 optical coupler reduces the overall noise of the system. This is because the direct-detection terms and the common-mode noise remain in the recovered X quadrature in the scheme with only two photodetected signals.

A third input port of the further symmetric 3x3 optical coupler may remain open.

Similar to the previously-described configuration wherein the third input port of the (first) symmetric 3x3 optical coupler remains open, the flexibility of the receiver module is further enhanced when also the third input port of the further symmetric 3x3 optical coupler remains open.

The quantum signal may comprise a coherent state of light with encoded information in the X and P quadrature components, wherein the signal processing unit is configured to determine the X and P quadrature components from the outputs of the plurality of photodetectors.

The input ports and/or the output ports of the symmetric 3x3 optical coupler and/or the further symmetric 3x3 optical coupler may be implemented using fused optical fibers. In other words, the input ports and/or output ports of one or both symmetric 3x3 optical couplers may be configured to be connected to optical fibers. This means that the quantum signal and the light from the local oscillator are provided through an optical fiber and are guided directly into the respective optical coupler.

Fused optical fibers are low-cost and robust components with low insertion loss, high stability and a simple manufacturing process. The receiver module thus benefits from these advantages.

The above-described receiver module for CV-QKD could also be used as part of a CV-QKD transmitter, providing an internal unit that allows for characterizing and monitoring quantum signal preparation.

### Short description of the drawings

Further features and advantages will now be described in combination with the enclosed figures.
- Figure 1: illustrates a receiver module according to a first embodiment; and
- Figure 2: illustrates a receiver module according to a second embodiment.

### Detailed description of the drawings

In the following and the figures, if not specified to the contrary, the same reference signs denote the same or corresponding elements in the described embodiments.

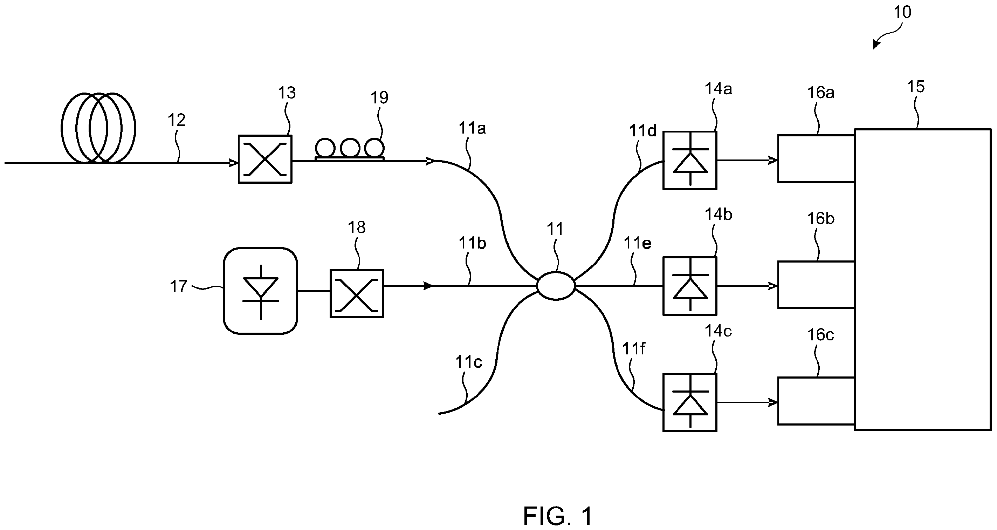

Figure 1 shows a receiver module 10 for use in CV-QKD according to a first embodiment. The receiver module comprises a quantum channel 12, which can be an optical fiber, for instance. A quantum signal is transmitted through the quantum channel 12 and directed to polarization controlling means 19. The receiver module 10 further includes a local oscillator 17 configured to provide high-intensity coherent light at a predetermined and stable frequency. The local oscillator 17 may be a laser, for instance. The light emitted from the local oscillator 17 may be considered stable and narrow-linewidth if the spectral width of the light is smaller than 0.05 % of the modulation bandwidth of the quantum signal. The frequency of the light emitted by the local oscillator 17 may be chosen such that a frequency difference between the quantum signal and the light emitted by the local oscillator 17 is smaller than 5 % of the modulation bandwidth of the quantum signal. In addition, an optical power of the light from the local oscillator 17 is chosen high enough so that the receiver module operates in the shot noise regime. In this regime, the shot noise created by the photodetectors is the dominant noise source over other sources of electronic noise. For instance, the optical power of the emitted light is higher than 2 dBm for a receiver module implemented with photodetectors that have noise equivalent power of $20 pW / \sqrt{Hz}$.

The polarization controlling means 19 is configured to align the polarization of the quantum signal with the polarization with the light from the local oscillator 17.

After passing through the polarization controlling means 19, the quantum signal is injected to a first input port 11a of a symmetrical 3x3 optical coupler 11. Likewise, the light from the local oscillator 17 is injected into a second input port 11b of the symmetrical 3x3 optical coupler 11. A third input port 11c remains unused in this embodiment. The polarization alignment performed by the polarization controlling means 19 ensures that the polarizations of the quantum signal and the light from the local oscillator 17 are aligned. These two signals interfere at the symmetrical 3x3 optical coupler 11 in a way that the amplitude of the interference signal is proportional to the cosine of the scalar product of the two polarization vectors. The interference signal is thus maximized for aligned polarizations.

To this end, the polarization controlling means 19 may be an active component that aligns the polarization of the quantum signal with the polarization of the light emitted by the local oscillator 17. In particular, the alignment of the polarization may include feedback control, wherein the polarizations are monitored and aligned continuously in order to maintain aligned polarizations and maximal interference amplitude.

As already instigated by the nomenclature, the symmetrical 3x3 optical coupler has three input ports 11a, 11b, 11c and three output ports 11d, 11e, 11f. The third input port 11c remains open or unused in this embodiment. In quantum mechanical terms, this means that a vacuum state is inserted at the third input port 11c. Nonetheless, one may conceive a further development of the present receiver module, wherein an additional signal is provided to the third input port 11c.

Moreover, a first optical switch 13 means is provided between the quantum channel 12 and the polarization controlling means 19. Alternatively, the optical switch 13 means may be provided between the polarization controlling means 19 and the first input port 11a of the symmetric 3x3 optical coupler 11. In addition, a second optical switch 18 means is provided between the local oscillator 17 and the second input port 11b of the symmetric 3x3 optical coupler 11. The first and second optical switch means 13, 18 are optical switches. The optical switches 13, 18 have two modes of operation and can be switched between these two modes. In the first mode, the respective signal or light passes through the optical switch. In the second mode, the respective signal or light is blocked.

The quantum signal transmitted through the quantum channel 12 may include a coherent state of light. In such a coherent state, quantum information is encoded in the quadratures of the electromagnetic field, namely X = AcosΦ and P = AsinΦ, where A and Φ represent the amplitude and phase of the quantum signals, respectively. The present receiver module 10 is configured to measure these quadratures of the coherent states prepared by the transmitter module.

The quantum signal and the light from the local oscillator 17 are combined by the symmetric 3x3 optical coupler 11 and the output thereof consists of three optical fields that are output via the output ports 11d, 11e, 11f. In other words, each output port 11d, 11e, 11f outputs one of the three optical fields. These optical fields result from the mixing of the quantum signal S and the light L from the local oscillator with phase shifts in multiples of 2π/3. These fields are thus represented as *S + e^{iφ}L* for φ being one of -2π/3, 0 and 2π/3. Single-ended photodetectors 14a, 14b, 14c detect each of these fields and generate an output proportional to the real part of the above field representation, i.e. *Re*(*S + L^{*}e^{iφ}*)*.* Following detection by the single-ended photodetectors 14a, 14b, 14c and digital sampling by the ADCs 16a, 16b, 16c, a mathematical transformation is applied over the three detected signals to recover the quadrature components X and P.

The optical switches 13, 18 can be employed to perform accurate calibration of electronic noise and shot noise. When blocking the quantum signal with the optical switch 13, any signal measured by the photodetectors 14a, 14b, 14c and received by the signal processing unit 15 corresponds to the shot noise generated within the system. Similarly, when further blocking the light from the local oscillator 17 with the optical switch 18, any signal measured by the photodetectors 14a, 14b, 14c and received by the signal processing unit 15 corresponds to the electronic noise generated within the system. These noises can be characterized accurately and employed by the subsequent signal processing procedure performed by the signal processing unit 15, for calibration of the receiver according to the CV-QKD protocol. As a result, the noise present in each quadrature component of the detected quantum signal is computed with high accuracy.

In this context, single-ended photodetectors, opposed to balanced photodetectors, require a careful characterization of noise and dynamic range to avoid saturation, and its suppression, i.e. balancing of the photocurrents, is implemented through digital processing routines. These routines must balance the photodetection with high accuracy while addressing conditions such as saturation of detectors, variation in detection efficiencies or differences between the electronic and shot noise of each detector. This compensation can be implemented in the signal processing unit leading to close-to-ideal common mode rejection.

This mathematical transformation implemented in the signal processing unit 15 is performed through matrix multiplication and obeys the following relation: $\left(\begin{matrix}X \\ P\end{matrix}\right) = \frac{2}{3} \left(\begin{matrix}1 & - 1 / 2 & - 1 / 2 \\ 0 & \sqrt{3} / 2 & - \sqrt{3} / 2\end{matrix}\right) \left(\begin{matrix}{I}_{0} \\ {I}_{2 π / 3} \\ {I}_{- 2 π / 3}\end{matrix}\right) .$

**Herein,** *I*₀, *I*_{2*π*/3} and *I*_{-2π/3} correspond to the three outputs of the single-ended photodetectors 14a, 14b, 14c, which detect the corresponding output of the symmetric 3x3 optical coupler.

In this manner, the described receiver module 10 is configured to determine the quadrature components of a coherent state of light.

The proposed scheme of a receiver module 10 for use in CV-QKD does not include an optical 90° hybrid and circumvents the associated shortcoming of overall system deterioration due to high coupling losses and limited phase shift precision. Noise within the system can be characterized accurately by means of the optical switches 13, 18 for receiver calibration purposes, and the imperfections of the optical components, e.g. non-symmetry of the 3x3 coupler or unbalance in photodetectors gain, can be compensated digitally owing to the single-ended photodetection and compensation schemes implemented in the signal processing unit 15, yielding an improvement in the common-mode rejection and noise suppression of the proposed receiver when compared with a receiver using optical 90° hybrid and balanced photodetectors. Overall, this results in a highly accurate receiver module 10.

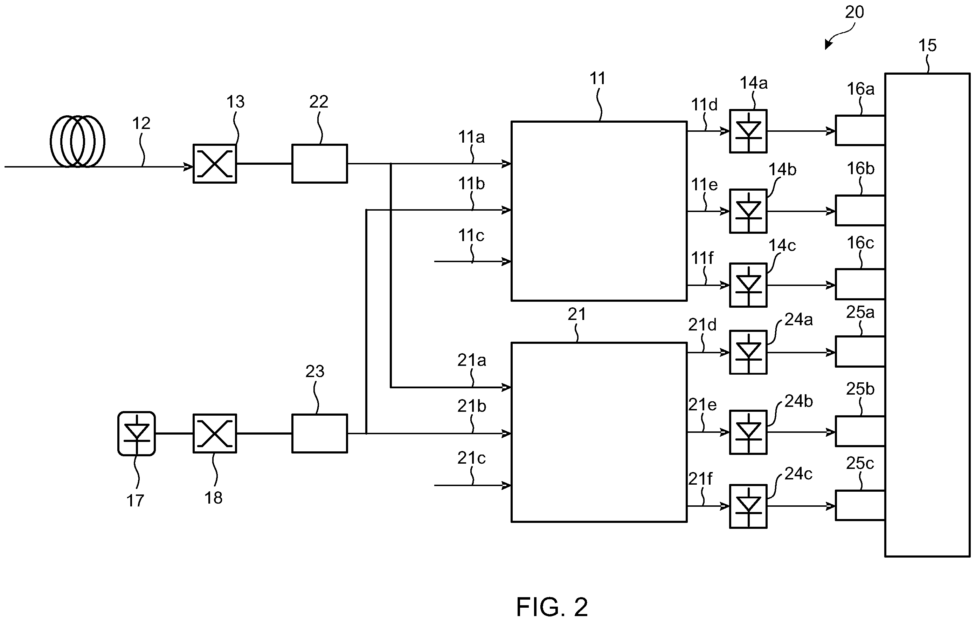

Figure 2 shows a receiver module 20 for use in CV-QKD according to a second embodiment. The differences from the first embodiment will be explained in detail below, while elements in common with the first embodiment are not reiterated at this point. This embodiment does not include polarization controlling means, but employs a second (further) symmetric 3x3 optical coupler 21 in combination with a polarization beam splitter 22 and a beam splitter 23. Like the symmetric 3x3 optical coupler 11, the second symmetric 3x3 optical coupler 21 has three input ports 21a, 21b, 21c and three output ports 21d, 21e, 21f.

The polarization beam splitter 22 separates two orthogonal polarization components (e.g. horizontal and vertical) of the quantum signal and provides the first polarization component to the first input port 11a of the symmetric 3x3 optical coupler 11, and provides the second polarization component of the quantum signal to the first input port 21a of the second symmetric 3x3 optical coupler 21.

The beam splitter 23 separates the light from the local oscillator 17 into two parts, to provide the first part to the second input port 11b of the symmetric 3x3 optical coupler 11 and to provide the second part to a second input port 21b of the further symmetric 3x3 optical coupler 21. The beam splitter 23 may be polarization-dependent (like the polarization beam splitter 22) or polarization-independent.

While the polarization controlling means can be an active component that requires feedback control, the beam splitters 22, 23 are passive components. Thus, the part of the receiver module dedicated to polarization control can be simplified considerably. Moreover, a purely passive optical front-end design is provided that is more suitable for photonic integration.

Like in the previous embodiment, the output from each of the three output ports 11d-f, 21d-f of both symmetric 3x3 optical couplers is detected by photodetectors 14a-c, 24a-c, digitized by ADCs 16a-c, 25a-c, and provided to the signal processing unit 15. Hence, the outputs of both symmetric 3x3 optical couplers are separately detected and digitized, and provided to the signal processing unit 15.

This configuration of the receiver module 20 combines the measurements related to two polarizations to obtain the quadrature components X and P. Not only does this dual-polarization scheme avoid the use of active components for polarization control, it also enhances flexibility as different information can be encoded in the two polarizations. This increase in flexibility merely requires additional photodetectors and ADCs to detect and digitize the outputs of both symmetric 3x3 optical couplers.

In both previously described embodiments, it is possible to extract the quadrature components X and P from only two photodetector signals among *I*₀, *I*_{2*π*/3}*, I*_{*-*2*π*/3}*.* In this case, the transformation matrix given in Eq. (1) translates into $\left(\begin{matrix}X \\ P\end{matrix}\right) = \left(\begin{matrix}1 & 1 \\ 1 / \sqrt{3} & - 1 / \sqrt{3}\end{matrix}\right) \left(\begin{matrix}{I}_{ϕ 1} \\ {I}_{ϕ 2}\end{matrix}\right)$ wherein *I*_{*ϕ*1} and *I*_{*ϕ*2} are any pair of the three photodetector signals. In this implementation, however, the direct-detection terms and the common-mode noise remain for the X quadrature and therefore might lead to an increase of the total noise of the receiver module.

According to another alternative, the receiver module may not have to comprise a local oscillator. Instead, the light provided by the local oscillator may be transmitted through the quantum channel or provided by a separate fiber channel. Regardless, interference of both signals happens at the symmetric 3x3 optical coupler and the mixing, photodetection and signal processing is performed in accordance with the previously-described embodiments.

## Claims

1. A receiver module (10, 20) for use in continuous-variable quantum key distribution, comprising:
a symmetric 3x3 optical coupler (11) having three input ports (11a, 11b, 11c) and three output ports (11d, 11e, 11f);
a quantum channel (12) for providing a quantum signal to the symmetric 3x3 optical coupler (11);
an optical switch means (13) arranged between the quantum channel (12) and a first input port (11a) of the symmetric 3x3 optical coupler (11) and configured to block or attenuate the quantum signal;
a first single-ended photodetector (14a), a second single-ended photodetector (14b); and
a signal processing unit (15) configured to process the outputs of the single-ended photodetectors (14a, 14b),
wherein the first photodetector (14a) is coupled to a first output port (11d) of the symmetric 3x3 optical coupler (11) and the second single-ended photodetector (14b) is coupled to a second output port (11e) of the symmetric 3x3 optical coupler (11).

2. The receiver module (10, 20) according to claim 1, further comprising a local oscillator (17) configured to emit light at a predetermined frequency,
wherein the local oscillator (17) is connected to a second input port (11b) of the symmetric 3x3 optical coupler (11).

3. The receiver module (10, 20) according claim 2, wherein a frequency difference between the quantum signal and the light emitted by the local oscillator (17) is smaller than or equal to 5 % of the modulation bandwidth of the quantum signal,
in particular, smaller than or equal to 1 % of the modulation bandwidth of the quantum signal.

4. The receiver module (10, 20) according to any of the preceding claims, wherein a third input port (11c) of the symmetric 3x3 optical coupler (11) remains open.

5. The receiver module (10, 20) according to any of the preceding claims, further comprising a first analog-to-digital converter (16a) for digitizing the output of the first single-ended photodetector (14a),
and a second analog-to-digital converter (16b) for digitizing the output of the second single-ended photodetector (14b)
wherein the digitized outputs of the first and second single-ended photodetectors (14a, 14b) are provided to the signal processing unit (15).

6. The receiver module (10, 20) according to any of the preceding claims, further comprising a third single-ended photodetector (14c) connected to a third output port (11f) of the symmetric 3x3 optical coupler (11),
wherein an output of the third single-ended photodetector (14c) is provided to the signal processing unit (15), and
in particular, further comprising a third analog-digital converter (16c) for digitizing the output of the third single-ended photodetector (14c) and providing the digitized output to the signal processing unit (15).

7. The receiver module (10, 20) according to any of claims 2 to 6, comprising a further optical switch means (18) arranged between the local oscillator (17) and the second input port (11b) of the symmetric 3x3 optical coupler (11), wherein the further optical switch means (18) is configured to block or attenuate the light from the local oscillator (17).

8. The receiver module (10, 20) according to any of the preceding claims, wherein the signal processing unit (15) comprises a Field Programmable Gate array, FPGA, and/or an application-specific integrated circuit, ASIC.

9. The receiver module (10, 20) according to any of claims 2 to 8, further comprising a polarization controlling means (19) arranged between the quantum channel (12) and the first input port (11a) of the symmetric 3x3 optical coupler (11) or between the first optical switch (13) and the first input port (11a) of the symmetric 3x3 optical coupler (11),
wherein the polarization controlling means (19) is configured to align the polarization of the quantum signal with the polarization of the light emitted by the local oscillator (17).

10. The receiver module (20) according to any of claims 2 to 8, further comprising:
a further symmetric 3x3 optical coupler (21) with three input ports (21a, 21b, 21c) and three output ports (21d, 21e, 21f);
a first beam splitter (22) being a polarization beam splitter; and
a second beam splitter (23),
wherein the first beam splitter (22) is configured to separate two orthogonal polarization components of the quantum signal, to provide the first polarization component to the first input port (11a) of the symmetric 3x3 optical coupler (11) and to provide the second polarization component of the quantum signal to a first input port (21a) of the further symmetric 3x3 optical coupler (21), and
wherein the second beam splitter (23) is configured to separate the light from the local oscillator (17) into two parts, to provide the first part to the second input port (11b) of the symmetric 3x3 optical coupler (11) and to provide the second part to a second input port (21b) of the further symmetric 3x3 optical coupler (21).

11. The receiver module (20) according to claim 10, further comprising:
a first further single-ended photodetector (24a) and a second further single-ended photodetector (24b); and
a first further analog-to-digital converter (25a) and a second further analog-to-digital converter (25b),
wherein the first further analog-to-digital converter (25a) is configured to digitize the output of the first further single-ended photodetector (24a),
wherein the second further analog-to-digital converter (25b) is configured to digitize the output of the second further single-ended photodetector (24b),
wherein the digitized outputs of the first and second further analog-to-digital converters (25a, 25b) are provided to the signal processing unit (15).

12. The receiver module (20) according to claim 10 or 11, wherein a third input port (21c) of the further symmetric 3x3 optical coupler (21) remains open.

13. The receiver module (20) according to any of claims 10 to 12, wherein the beam splitter (23) is polarization-dependent or polarization-independent.

14. The receiver module (10, 20) according to any of the preceding claims, wherein the quantum signal comprises a coherent state of light with encoded information in the X and P quadrature components, and
wherein the signal processing unit (15) is configured to recover the X and P quadrature components from the outputs of the plurality of photodetectors (14a, 14b, 14c, 24a, 24b, 24c).

15. The receiver module (10, 20) according to any of the preceding claims, wherein the input ports (11a, 11b, 11c; 21a, 21b, 21c) and/or the output ports (11d, 11e, 11f; 21d, 21e, 21f) of the symmetric 3x3 optical coupler (11) and/or the further symmetric 3x3 optical coupler (21) are implemented using fused optical fibers.
